# EUROPEAN PATENT SPECIFICATION

(11) **EP 3 100 112 B1**
(45) Date of publication and mention of the grant of the patent: **29.08.2018**
(21) Application number: 15743964.7
(22) Date of filing: 30.01.2015
(51) Int. Cl.: G02F 1/167

(54) **REFLECTIVE IMAGE DISPLAY WITH DIELECTRIC LAYER**
REFLEKTIERENDE BILDANZEIGE MIT DIELEKTRISCHER SCHICHT
AFFICHAGE D'IMAGE RÉFLÉCHISSANT ET COMPORTANT UNE COUCHE DIÉLECTRIQUE

(30) Priority: 31.01.2014 US 201461934596 P
(43) Date of publication of application: 07.12.2016
(73) Proprietor: Clearink Displays, Inc., Fremont CA 94538 (US)
(72) Inventor: GOULDING, Mark, Ringwood Hampshire BH24 1SH (GB); KEMP, Roger, Winchester SO23 9NP (GB); SMITH, Nathan, Southampton SO15 2TD (GB); SADLIK, Bram M., Vancouver, British Columbia V5V 1R3 (CA); WHITEHEAD, Lorne A., Vancouver, British Columbia V6K 4E2 (CA); PULLEN, Anthony E., Tucson, Arizona 85742 (US)
(74) Representative: Browne, Robin Forsythe
(86) International application number: PCT/US2015/013725
(87) International publication number: WO 2015/116913

(56) References cited:
- US-A1- 2007 263 291
- US-A1- 2009 201 570
- US-A1- 2009 322 669
- US-B1- 6 215 920
- US-B2- 6 891 658
- US-B2- 7 422 964
- US-B2- 8 094 364
- US-B2- 8 384 659

## Description

### Field

The disclosure is directed to an apparatus for reflective image displays. In one embodiment, the disclosure relates to a reflective image display comprising a dielectric layer located on the surface of at least one electrode.

### Background

Dielectric materials are widely used in a broad range of industrial applications.
Dielectric coatings typically have, for example, resistance to high temperatures, radiation, oxidative degradation along with abrasion, friction and other various forms of physical wear. Additionally, dielectric coatings typically provide resistance to solvents and other chemicals along with exhibiting excellent electrical insulating properties. Dielectric compounds can be organic or inorganic in type. The most common inorganic dielectric material is silicon dioxide commonly used in integrated chips. Organic dielectric materials are typically polymers such as polyimides, fluoropolymers, polynorbomenes and hydrocarbon-based polymers lacking polar groups.
US 6891658 B2 discloses a wide viewing angle reflective display, on which the preamble of claim 1 is based. US 8384659 B2 discloses a display element including electrodes and a fluid with colorant particles.

### Brief Description of Drawings

These and other embodiments of the disclosure will be discussed with reference to the following exemplary and non-limiting illustrations, in which like elements are numbered similarly, and where:
Fig. 1 is a cross-sectional view of a portion of a TIR semi-retro-reflective, hemispherical-beaded type display with a dielectric layer according to the present invention;
Fig. 2 is a cross-sectional view of a portion of a TIR semi-retro-reflective, hemispherical-beaded type display equipped with a perforated, continuous reflective membrane and a dielectric layer according to the present invention;
Fig. 3 is a cross-sectional view of a portion of a modulated reflective image display with a perforated, continuous reflective membrane and a dielectric layer not according to the present invention;
Fig. 4 is a cross-sectional view of a portion of a display comprising of a dielectric layer and a plurality of cavities connected by an aperture not according to the present invention; and
Fig. 5 is a graph illustrating the enhancement of the optical properties of the display by the presence of a dielectric layer.

### Detailed Description

It has been found that the addition of a dielectric layer on the transparent front electrode ITO layer and disposed between the ITO front electrode and the optically clear medium comprising electrophoretically mobile particles and on the rear electrode in a frustratable TIR semi-retro-reflective display enhances the performance and stability of said display. The dielectric layer aids in preventing sticking of the electrophoretically mobile particles on the ITO layer. This leads to improved responsiveness of the particles to an applied voltage bias. This further leads to improved grayscale control, enhanced brightness and reduced hysteresis. Additionally, the dielectric layer protects and provides chemical stability to the ITO layer at high voltages and temperatures when in contact with the medium comprising the electrophoretically mobile particles thus preventing degradation of the display performance over time.

For example, the poly(xylylene)-based dielectric materials (*e.g.,* parylenes) have shown to be a particularly promising family of dielectric materials in the applications described herein. The choice of parylene as the dielectric material has many advantages in both its inherent properties and ease of manufacturing. Parylene has high gas barrier properties such as to oxygen, moisture and carbon dioxide. Parylene is also optically transparent, has strong chemical resistance to solvents, acids and bases, high thermal stability and an excellent electrical insulator with low dielectric constant. Parylene may be deposited by a solvent free, chemical vapor deposition (CVD) process and without curing thereby resulting in films that are pin-hole free with excellent adhesion, conformal and of uniform thickness.

The disclosed embodiments provide various display architectures including the semi-retro-reflective, hemispherical-beaded type displays having one or more added dielectric layer(s). Advantageously, the disclosed embodiments result in displays having enhanced optical performance and chemical stability.

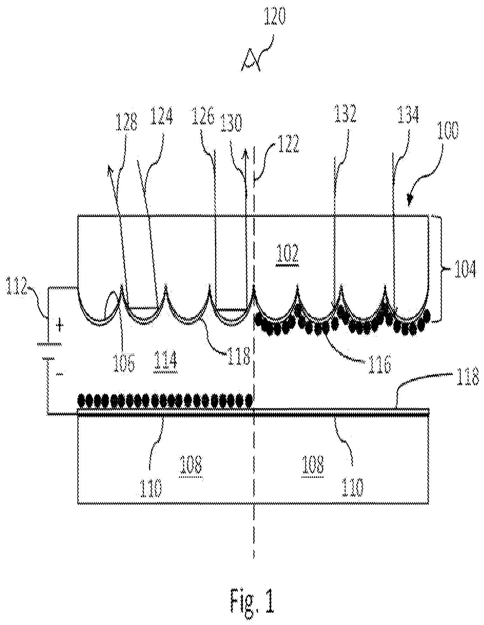

Fig. 1 is a cross-sectional view of a portion of a TIR semi-retro-reflective, hemispherical-beaded type display 100 with a dielectric layer. Display 100 includes a semi-retro-reflective front sheet 102 comprising of a plurality of partially embedded high refractive index transparent hemispherical beads 104 in the inward surface, a transparent front electrode layer 106 on the surface of the hemispherical beads, rear support 108 equipped with a rear electrode 110 such as in a thin film transistor or patterned electrode array and a voltage source 112 that connects the front and rear electrodes.

Alternatively, semi-retro-reflective front sheet 102 may define a continuous, high refractive index transparent sheet with convex protrusions. The convex protrusions may be in the shape of hemispherical protrusions. Front electrode 106 may include a transparent conductive material such as indium tin oxide (ITO), conductive nanoparticles, metal nanowires, graphene or other conductive carbon allotropes or a combination of these materials dispersed in a substantially transparent polymer or Baytron™.

Rear electrode 110 may include a conductive material such as indium tin oxide (ITO), conductive particles, metal nanowires, graphene or other conductive carbon allotropes or a combination thereof dispersed in a polymer, Baytron™ or a metallic-based conductive material (*e.g.,* aluminum, gold or silver). Contained within the cavity formed between front electrode 106 and rear electrode 110 may be an inert, low refractive index fluid medium 114. Medium 114 may further include suspended light absorbing electrophoretically mobile particles 116. In one embodiment, medium 114 has a lower refractive index than front sheet 102. The cavity formed between reflective front electrode 106 and rear electrode 110 may further comprise spacer units such as beads to control the size of the gap between the front and rear electrodes.

The exemplary embodiment of display 100 further includes dielectric layer 118 located on the surface of transparent front electrode 106 and disposed between transparent front electrode 106 and medium 114. Fig. 1 illustrates a dielectric layer on the rear electrode surface 110 in display 100 such that the dielectric layer is disposed between the rear electrode 110 and medium 114. Having a dielectric layer on the rear electrode may be optional and may depend on the composition of the rear electrode. The dielectric layer may be a uniform layer of at least about 20nm in thickness. The dielectric layer comprises parylene.

The dielectric layer may have a thickness of at least 80 nm. In an exemplary embodiment, the thickness is about 80-200 nm. Advantageously, parylene has a low dielectric constant and may be made as thin as 20 nm without having pinhole leakage paths. Such features contribute to display structures having a comparatively high capacitance per unit area. The high capacitance means that the required number per unit area of charged pigment particles can be attracted to the parylene at a lower voltage than if the thickness was higher or if the dielectric constant was lower.

Referring again to Fig. 1, the left side of the dotted line 122 shows a portion or a pixel of the display in the white, bright or semi-retro-reflective state. In this state, the electrophoretically mobile particles 116 are moved under the influence of an applied voltage bias near dielectric layer 118 adjacent to rear electrode 110 surface. The TIR occurs at the inward surface of sheet 102. This is illustrated by incident light rays 124 and 126 that are totally internally reflected in a semi-retro-reflective manner back towards the viewer 120 as illustrated by reflected light rays 128 and 130, respectively.

On the right side of the dotted line 122, Fig. 1 illustrates a portion or a pixel of display 100 in the frustrated TIR dark state. In this state, mobile particles 116 are moved under the influence of an applied voltage bias of opposite polarity (in contrast to the left side of Fig. 1). The particles aggregate near the surface of dielectric layer 118 located on the transparent front electrode 106 such that TIR is frustrated to thereby create a dark state. This is illustrated by incident light rays 132 and 134 being absorbed, for example, by the light absorbing electrophoretically mobile particles 116.

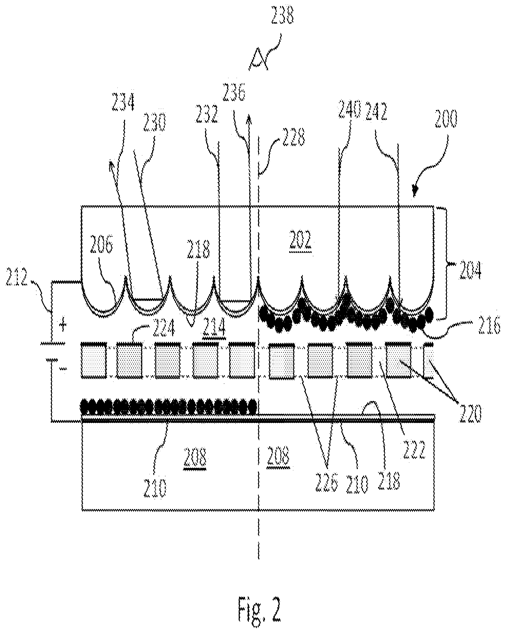

Fig. 2 is a cross-sectional view of a portion of a TIR semi-retro-reflective, hemispherical-beaded type display 200. The display includes a perforated, continuous reflective membrane and a dielectric layer. Display 200 also includes a semi-retro-reflective front sheet 202 comprising of a plurality of partially embedded high refractive index transparent hemispherical beads 204 in the inward surface, a transparent front electrode 206 on the surface of the hemispherical beads, rear support 208 with a rear electrode 210 (such as in a thin film transistor or patterned electrode array) and a voltage source 212 connecting the front and rear electrodes.

In an alternative embodiment, front sheet 202 may be a continuous, high refractive index transparent sheet having convex protrusions. The convex protrusions may be hemispherical in shape. The front and the rear electrodes may include similar compositions as described in relation to Fig. 1. Contained within the cavity formed between front electrode 206 and rear electrode 210 may be an inert, low refractive index fluid medium 214. Medium 214 may include suspended light absorbing electrophoretically mobile particles 216. In one embodiment, the refractive index of fluid 214 is smaller than the refractive index of front sheet 202. The cavity formed by the front electrode 206 and the rear electrode 210 may further comprise spacer units such as beads to control the size of the gap between the two electrodes.

Display 200 of Fig. 2 may further comprise a transparent dielectric layer 218 formed on front electrode 206 and disposed between the front electrode and medium 214. Fig. 2 also illustrates second dielectric layer 218 on the rear electrode such that the dielectric layer is disposed between the rear electrode 210 and medium 214. A dielectric layer on the rear electrode may be used optionally depending on the composition of the rear electrode. The dielectric layer may be a uniform layer of at least about 20 nm in thickness and comprises parylene. In one implementation, the thickness of the dielectric layer is at least about 80 nm. In another implementation, the thickness is in the range of about 80 - 200 nm. An advantage of parylene is its ability to be deposited in a conformal manner with uniform thickness. Due to the contoured nature of the surface of front sheet 202 it is critical that the dielectric layer of choice can be coated uniformly. Poor coating uniformity may lead to non-uniform electrical and optical properties of the display. The ability to provide uniform coating makes parylene a suitable material for manufacturing displays shown in relation to Figs. 1 and 2.

Referring again to Fig. 2, display 200 further includes a perforated, porous reflective membrane 220 to enhance brightness of the TIR display. Membrane 220 may be disposed between front dielectric layer 218 (adjacent to front electrode 206) and rear electrode 210. The average diameter of the pores 222 in membrane 220 may vary depending on the application. In one exemplary embodiment, the pores are substantially greater (*e.g.,* about 10 times greater) than the average diameter of absorptive particles 216. Pores 222 in membrane 220 constitute a sufficiently large fraction (*e.g.,* at least 20%) of the total surface area of membrane 220 to permit substantially unimpeded passage of absorptive particles 216 through membrane 220. Membrane 220 can be formed of a porous membrane material such as polycarbonate or fiber-weave membrane.

Outward surface 224 of membrane 220 may be reflective and may be either diffusely or specularly reflective. A reflective membrane 220 can be formed from an intrinsically reflective material such as a multilayer broadband reflector (*e.g.,* Multilayer Optical Film available from 3M, St. Paul, MN) or aluminized Mylar™ flexible film, or by coating outward surface 224 with a reflective (e.g. aluminum) film using standard vapour deposition techniques. Reflective film 224 may comprise TiO₂. The continuous nature of membrane 220 is represented by dotted lines 226 in the exemplary embodiment of Fig. 2.

On the left side of dotted line 228, display 200 depicts a portion or a pixel of the display in the white, bright or semi-retro-reflective state. In this state, electrophoretically mobile particles 216 are moved under the influence of an applied voltage bias towards rear electrode 210 where they collect near the rear dielectric layer surface 218 such that TIR may occur at the inward surface of sheet 202. This is illustrated by incident light rays 230 and 232 that are totally internally reflected in a semi-retro-reflective manner as depicted by reflected light rays 234 and 236 toward viewer 238.

On the right side of the dotted line 228 illustrates a portion or a pixel of the display in the frustrated TIR dark state. In this state, mobile particles 216 are moved under the influence of an applied voltage bias of opposite polarity to near the surface of the front dielectric layer 218 such that TIR is frustrated. This is illustrated by incident light rays 240 and 242 being absorbed, for example, by the light absorbing mobile particles 216.

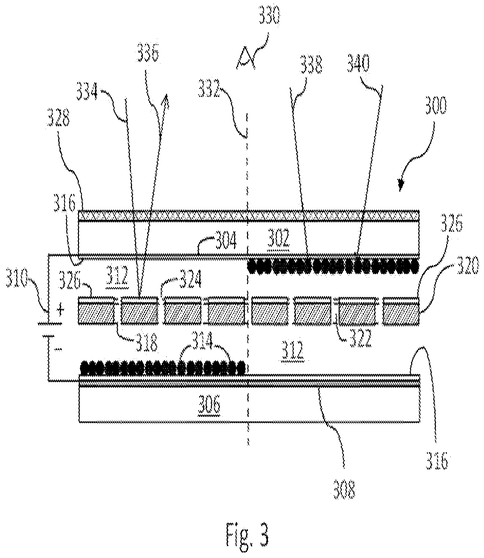

Fig. 3 is a cross-sectional view of a portion of a modulated reflective image display 300 with a perforated, continuous reflective membrane and a dielectric layer. Here, Instead of light being reflected at a semi-retro-reflective front sheet as illustrated in Figs. 1 and 2, light is reflected at a semi-specular or semi-retro-reflective surface on a perforated porous reflective membrane. Display 300 is not according to the invention.

Display 300 includes transparent outer sheet 302, transparent front electrode 304, rear support 306 with a top conductive layer acting as a rear electrode 308. The rear electrode may define a thin film transistor or patterned array. In Fig. 3, a voltage source 310 connects the front and rear electrodes. Front electrode 304 and rear electrode 308 may include similar material and thickness as discussed in relation to Figs. 1 and 2. Contained within the cavity formed between front electrode 304 and rear electrode 308 may be an inert, low refractive index fluid medium 312 which may further include suspended light absorbing electrophoretically mobile particles 314. The cavity may further comprise spacer units such as beads to control the size of the gap formed by said front and rear electrodes. On top of the transparent front electrode 304 is a transparent dielectric layer 316 disposed between the transparent front electrode 304 and medium 312.

Fig. 3 also illustrates second dielectric layer 316 on the rear electrode surface 308 such that the second dielectric layer is disposed between the rear electrode 308 and medium 312. The second dielectric layer on the rear electrode may be optional depending on the composition of the rear electrode. The second dielectric layer may be a uniform layer of at least about 20 nm in thickness. The second dielectric layer may comprise parylene or other inorganic or organic dielectric materials or combinations. In one example, the second dielectric layer is at least 80 nm thick. In another example, the second dielectric thickness is in the range of about 80-200 nm.

Disposed within the cavity and between the front and rear dielectric layers 316 is a thin, perforated, porous, continuous (represented by the dotted lines 318 to imply a continuous layer) membrane 320. Membrane 320 may be formed of a track etched polymeric material such as polycarbonate, polyester, polyimide or some other polymeric material or glass with a thickness of at least about 10 microns. The porous nature of the film 320 allows for light absorbing particles 314 to pass through pores 322. The average diameter of the pores in membrane 320 may be substantially greater (*e.g.,* about 10 times greater) than the average diameter of light absorptive particles 314. The pores in membrane 320 may constitute a large fraction (*e.g.,* at least 10%) of the total surface area of membrane 320 to permit substantially unimpeded passage of absorptive particles 314 through pores 322.

Display 300 further illustrates an additional first porous and continuous (represented by the dotted lines 324 to imply a continuous layer) reflective layer 326 on top of the perforated, porous, continuous membrane 320. Additional layer 326 may include a thin light specularly reflective metal layer such as aluminum, silver, gold, aluminized Mylar™ flexible film or other material to enhance reflectance. Light diffusing layer 328 may optionally be added to the outside of the outer sheet 302 and face viewer 330 in order to "soften" the specularly reflected light from reflective layer 326. Reflective layer 326 may further include a semi-retro-reflective coating. The semi-retro-reflective coating 326 may be comprised of corner-cube or partial corner-cube reflectors or glass beads embedded in a reflective substrate or in a transparent matrix and backed by an additional and optional reflective layer. A layer of sintered TiO₂ may also be used as reflective layer 326.

In one example, the level of diffuse reflectance from semi-retro-reflective coating 326 is not so high as to cause pixel or sub-pixel cross-talk. For example, if light enters through one sub-pixel it may be reflected by semi-retro-reflective coating 326 such that light exits through the same sub-pixel, otherwise the contrast and/or color saturation will be reduced. In another example, the front electrode and transparent dielectric layer may reside directly on the reflective layer of the porous membrane 320.

On the left side of the dotted line 332 in display 300 in Fig. 3 depicts a portion or pixel of the display in the specular, semi-specular or semi-retro-reflective state. In this state, the mobile particles 314 are moved under the influence of an applied voltage bias towards rear dielectric layer 316 adjacent the rear electrode surface 308 such that reflection can occur at reflective layer 326. This is illustrated by incident light ray 334 that is reflected in a specular, semi-specular semi-retro-reflective manner (as depicted by reflected light ray 336) back towards the viewer 330 to create a light state. On the right side of dotted line 332 depicts a dark state. Here, the electrophoretically mobile particles are moved through the pores 322 under the influence of an applied voltage bias and collect near front dielectric layer 316 so as to absorb incident light rays. This is represented by light rays 338 and 340 being absorbed by the light absorbing mobile particles 314.

The display architectures illustrated in Figs. 1-3 may further comprise walls that create wells or compartments to confine the electrophoretically mobile particles. The walls or cross walls may be configured to create wells or compartments in, for example, square-like, triangular, pentagonal, hexagonal or a combination thereof of shapes. The walls may comprise a polymeric material and patterned by conventional techniques including photolithography, embossing or molding. The walls help to confine the electrophoretically mobile particles to prevent settling and migration of said particles that may lead to poor display performance over time. In certain embodiments the displays may comprise cross walls that completely bridge the gap created by the front and rear electrodes in the region where the liquid medium and the mobile particles resides. In certain embodiments, displays 100, 200 or 300 may comprise partial cross walls that only partially bridge the gap created by the front and rear electrodes in the region where the liquid medium and the mobile particles resides. In certain embodiments, displays 100, 200 or 300 may further comprise a combination of cross walls and partial cross walls that may completely and partially bridge the gap created by the front and rear electrodes in the region where the liquid medium and the mobile particles resides.

Reflective image display architectures 100, 200 and 300 illustrated in Figs. 1-3, respectively, and described in the preceding paragraphs may further comprise a color filter array layer. Said color filter array layer may comprise of red, green and blue or cyan, magenta and yellow filters or a combination thereof. In an embodiment, display 100 illustrated in Fig. 1 and described in preceding paragraphs may further comprise cross walls and a color filter array layer. In another embodiment, display 200 illustrated in Fig. 2 and described in preceding paragraphs may further comprise cross walls and a color filter array layer. In another example, display 300 illustrated in Fig. 3 and described in preceding paragraphs may further comprise cross walls and a color filter array layer.

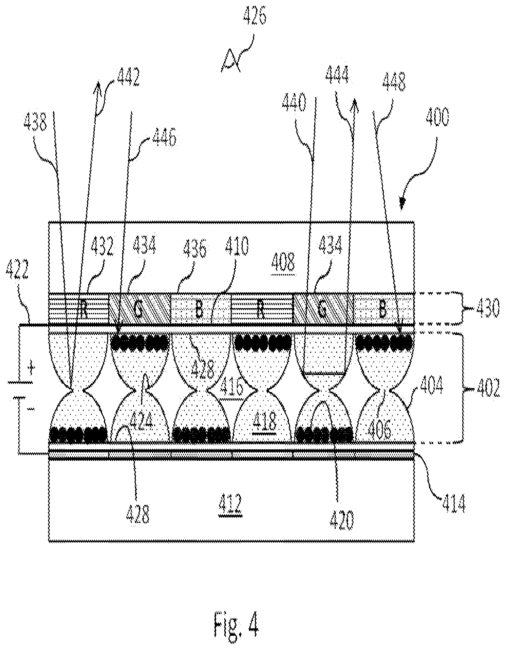

Fig. 4 is a cross-sectional view of a portion of a display comprising of a dielectric layer and a plurality of cavities connected by an aperture. Fig. 4 also illustrates a cross-section of a reflective display 400 having thin layer 402 etched on both sides to form a plurality of substantially hemispherical cavities (interchangeably, chambers) 404. The cavities are connected by an aperture. Display 400 is not according to the present invention. In Fig. 4, the hemispherical cavities 404 form hourglass-shaped voids having a top hemispherical cavity, a narrow opening or aperture 406 and a bottom cavity. The cavities 404 can be arranged in a variety of manners including hexagonal or square packed array. In one embodiment, the cavities are arranged in a hexagonal close packed array in order to maximize the area within the thin layer that is filled with cavities to limit the amount of non-optically active zones in the display.

Display 400 further includes a top transparent outward sheet 408, transparent front electrode 410, rear support 412 and rear electrode 414 comprising of a thin film transistor or patterned array, non-etched remaining material 416 acting as a support of the thin layer 402 for structural integrity. Front electrode 410 and rear electrode 414 may comprise substantially the same material and dimensions as those described in relation to Figs. 1-3.

An inert, optically transparent fluid medium 418 having suspended light absorbing electrophoretically mobile particles 420 may be disposed within hourglass-shaped cavities 404. Display 400 may also include voltage source 422 that connects front electrode 410 and rear electrode layers 414 such that a voltage bias may be applied across the medium comprising the electrophoretically mobile particles 420 suspended in fluid 418.

In one example, rear electrode 414 includes a thin film transistor or patterned array registered with each rear or bottom hemispherical cavity 404 such that mobile particles 420 contained within each cavity can be controlled individually to create a high resolution display. The surface of the top hemispherical cavity 404 may be coated with reflective layer 424 to reflect light back to the viewer 426. Display 400 may also include transparent front dielectric layer 428 on the transparent front electrode layer 410. A second dielectric layer 428 may be formed on rear electrode surface 414 such that the dielectric layer is disposed between the rear electrode 414 and medium 418. A dielectric layer on the rear electrode may be optionally added as a function of the composition of the rear electrode. The dielectric layer may define a uniform layer of at least about 20 nm in thickness and may comprise parylene or other inorganic or organic dielectric materials or combinations thereof. In one example, the dielectric layer thickness is at least about 80 nm. In another example, the dielectric thickness is in the range of about 80-200 nm.

The display may further comprise an optional color filter layer 430 having an array of individual sub-pixels of colors including red 432 (depicted by the letter "R"), green 434 (depicted by the letter "G"), and blue 436 (depicted by the letter "B"). Alternatively, the sub-pixel colors may be cyan, magenta and yellow. In one example, each color sub-pixel may be registered with a single hemispherical cavity 404. To achieve a high resolution full color image with high efficiency, entering and exiting reflected light ray may pass through the same color sub-pixel within the color filter array layer 430.

In Fig. 4, incident light rays 438 and 440 pass through transparent outward sheet 408, transparent front electrode 410, transparent dielectric layer 428 and color sub-pixels 432 and 434. Light rays 438 and 440 may be reflected at the reflective surface of the top hemispherical cavity or chamber 424 in a semi-specular or semi-retro-reflective manner represented by reflected light rays 442 and 444. The light rays are reflected back through the color filter layer 430 and transparent outward sheet 408 toward viewer 426 to create a light state when mobile particles 420 are moved through the narrow opening 406 where they collect near rear dielectric layer surface adjacent to rear electrode 414. The polarity of an applied voltage bias may be reversed to move mobile particles 420 through narrow opening 406 towards the surface of the front dielectric layer 428. The mobile particles may collect at this location and absorb incident light rays 446 and 448 within the individual hemispherical cavities 404 to create a dark state.

While not shown in Figs. 1-4, each display may also include a directional front light system. The directional front light system may include a light source, light guide and an array of light extractor elements on the top surface of the top sheet in each display. The directional light system may be positioned between the outward surface of the outward sheet and the viewer. The front light source may define a light emitting diode (LED), cold cathode fluorescent lamp (CCFL) or a surface mount technology (SMT) incandescent lamp. The light guide may be configured to direct light to the front entire surface of the transparent outer sheet while the light extractor elements direct the light in a perpendicular direction within a narrow angle, for example, centered about a 30° cone, towards the semi-retro-reflective or semi-specular sheets. A directional front light system may be used in combination with cross-walls or a color filter layer in the display architectures described herein or a combination thereof.

In an embodiment, display 100 illustrated in Fig. 1 and described in preceding paragraphs may further comprise cross walls and a directional front light system. In another embodiment, display 200 illustrated in Fig. 2 and described in preceding paragraphs may further comprise cross walls and a directional front light system. In another example, display 300 illustrated in Fig. 3 and described in preceding paragraphs may further comprise cross walls and a directional front light system.

In an embodiment, display 100 illustrated in Fig. 1 and described in preceding paragraphs may further comprise a color filter array layer and a directional front light system. In another embodiment, display 200 illustrated in Fig. 2 and described in preceding paragraphs may further comprise a color filter array layer and a directional front light system. In another example, display 300 illustrated in Fig. 3 and described in preceding paragraphs may further comprise a color filter array layer and a directional front light system.

In an embodiment, display 100 illustrated in Fig. 1 and described in preceding paragraphs may further comprise cross walls, a color filter array layer and a directional front light system. In another embodiment, display 200 illustrated in Fig. 2 and described in preceding paragraphs may further comprise cross walls, a color filter array layer and a directional front light system. In another example, display 300 illustrated in Fig. 3 and described in preceding paragraphs may further comprise cross walls, a color filter array layer and a directional front light system.

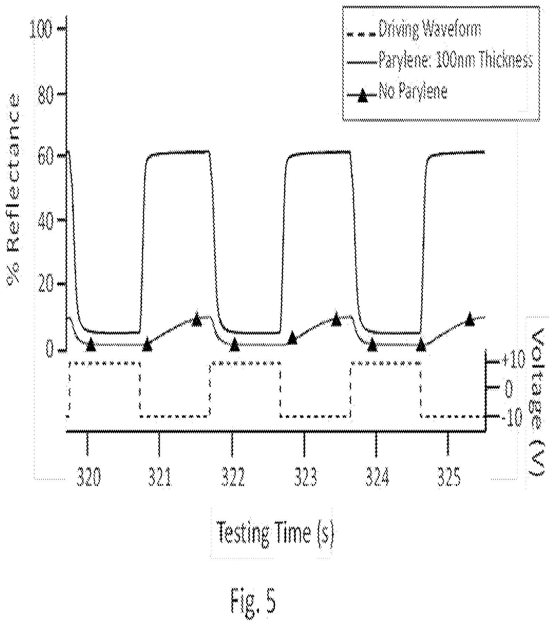

Fig. 5 is a graph illustrating the enhancement of the optical properties of the display due to the addition of a dielectric layer. The experimental display performance illustrated in Fig. 5 was generated by a display of similar architecture to display 100 illustrated in Fig. 1. Here, a first display (the control display) was tested in the absence of parylene layers on the front and rear electrodes. A second display was formed with parylene dielectric layers of about 100 nm thick on both the front and rear electrodes. The gap between the front hemispherical beaded sheet and the rear electrode was about 18microns and was mainlined using spacer beads of uniform diameter. The liquid medium contained within the cavity between the front and rear sheets included carbon black-based electrophoretically mobile, light absorbing particles. To test the impact of the dielectric layer with applied pulse, the display was initially driven to its black state at +10V and then 10V square wave pulses of one second duration were applied alternating between +10V (black state) and -10V (white state) while measuring the % reflectance of the display.

In Fig. 5, the driving waveform is illustrated by a dotted line at the bottom of the graph showing alternating square wave pulses between +10 and -10V for one second durations. The line with triangular markers represents the control display with no parylene dielectric layer where the maximum reflectance (the white state) at -10V reaches about 10% and the minimum reflectance (the dark state) at +10V is about 2% with an overall contrast ratio of the white state to dark state reflectance of about 5. The solid line shows the display with parylene layers of about 100 nm thickness on both the front and rear electrodes. The example shows a maximum white state reflectance of about 62% at -10V and a minimum dark state reflectance of about 5% at +10V with a contrast ratio of the white state to dark state at about 12.

The presence of a dielectric layer on the surface of the front and rear electrodes leads to brighter white states and higher contrast ratios. This may be due to the prevention of the mobile particles from sticking on the unprotected ITO layer by the dielectric layer. When the particles stick to the ITO layer (adjacent the hemispherical beaded surface), the remaining particles frustrate TIR during a desired white state leading to a decrease in reflectance. Particle sticking also leads to slower response times of the particles as seen in Fig. 5 for the sample with no parylene during application of -10V electric field. The reflectance increases throughout the one second pulse time whereas the display with the 100 nm parylene layers on the front and rear electrodes exhibits a faster response time. The rate at which maximum reflectance is reached appears to be achieved in a step-like manner and plateaus early during the one second pulse. The lack of particle sticking and faster and more predictable response time behavior of the mobile particles is also advantageous for multi-bit grayscale applications where complex waveforms are required.

In one embodiment, some controlled and predictable particle attraction to the dielectric layer may be desirable to attain bi-stability leading to lower display energy consumption. The ability of a display to retain a static image while the power is turned off greatly extends the life of the battery in consumer-based applications, for example, a hand held electronic book reader. In order to retain the benefit of the parylene layer but improve bi-stability the parylene surface may be modified to control the attractive or repulsive forces of the electrophoretically mobile particles to the parylene surface. For example, the parylene layer may be chemically treated after deposition to alter the surface properties. One such treatment is exposure to fluorine gas to fluorinate the parylene surface. Another method to modify the surface of parylene is to, for example, halogenate the parylene precursor material before deposition on the desired substrate. Parylene C is a common parylene-based dielectric material where the precursor is chlorinated on the phenyl ring of the parylene precursor dimer then deposited onto a surface leaving a chlorinated parylene layer. By altering the constituents on the phenyl ring (in the parylene backbone) one may tune the properties of the parylene such as the dielectric constant and surface energy and reactivity.

In general, the dielectric layer concept described in the preceding paragraphs can apply to any electrode topology for which it is advantageous to variably attract charged electrophoretically mobile pigment particles near a surface for the purposes of modifying reflection of light. The net optical effect may be specular, partially retro-reflective, fully retro-reflective, partially diffuse, or fully diffuse, or various intermediates. In terms of specific topologies, in addition to those pictured in the drawings herein, the protrusions on the surface or surfaces could be prismatic, conical, truncated cones, various figures of revolution, various random shapes, having the net characteristic that light is usefully re-directed and the quantity of re-directed light is controlled to an electrode covered with a high capacitance dielectric layer comprised of a parylene or parylene-like material.

In the display embodiments described herein, they may be used in various applications, including: electronic book readers, portable computers, tablet computers, cellular telephones, smart cards, signs, watches, shelf labels, flash drives and outdoor billboards or outdoor signs.

## Claims

1. A reflective image display device, comprising:
a transparent front sheet (102, 202) comprising convex protrusions or embedded spherical beads through which a viewer views the display;
a front electrode (106, 206); a rear support (108, 208); a rear electrode (110, 210); an optically transparent fluid medium (114, 214); a plurality of electrophoretically mobile particles (116, 216) suspended in the optically transparent fluid medium (114, 214); and
a voltage source (112, 212) for applying a bias across the optically transparent fluid medium (114, 214) to move at least one of the electrophoretically mobile particles (116, 216), **characterised by** a dielectric layer (118, 218) located on the surface of at least one electrode, wherein the dielectric layer comprises parylene or halogenated parylene.

2. The reflective image display device of claim 1, wherein the rear electrode (110, 210) further comprises a thin film transistor or patterned array.

3. The reflective image display device of claim 1 or 2, wherein the transparent front sheet (102, 202) is a semi-retro-reflective sheet having a plurality of hemispherical protrusions on an inward surface thereof.

4. The reflective image display device of any preceding claim, further comprising one or more walls or partial walls.

5. The reflective image display device of claim 4, wherein the walls may be used to create compartments to confine the electrophoretically mobile particles.

6. The reflective image display device of any preceding claim, further comprising a color filter array.

7. The reflective image display device of claim 6, wherein the color filter layer comprises an array of sub-pixels of colors including red, green and blue.

8. The reflective image display device of any preceding claim, further comprising a directional front light system.

9. The reflective image display device of any of claims 1 to 8, further comprising a perforated porous light reflective continuous membrane (220) between the front (206) and rear (210) electrodes.

## Patentansprüche

1. Reflektierende Bildanzeige-Vorrichtung,
die Folgendes aufweist:
- einen transparenten vorderen Flächenkörper (102, 202), der konvexe Vorsprünge oder eingebettete kugelförmige Perlen aufweist, durch die ein Betrachter die Anzeige betrachtet;
- eine vordere Elektrode (106, 206);
- einen hinteren Träger (108, 208);
- eine hintere Elektrode (110, 210);
- ein optisch transparentes fluides Medium (114, 214);
- eine Vielzahl von elektrophoretisch beweglichen Partikeln (116, 216), die in dem optisch transparenten fluiden Medium (114, 214) suspendiert sind; und
- eine Spannungsquelle (112, 212) zum Anlegen einer Vorspannung an das optisch transparente fluide Medium (114, 214), um mindestens eines der elektrophoretisch beweglichen Partikel (116, 216) zu bewegen, **gekennzeichnet durch**
eine dielektrische Schicht (118, 218), die sich auf der Oberfläche von mindestens einer Elektrode befindet, wobei die dielektrische Schicht Parylene oder halogenierte Parylene aufweist.

2. Reflektierende Bildanzeige-Vorrichtung gemäß Anspruch 1,
wobei die hintere Elektrode (110, 210) ferner einen Dünnschichttransistor oder ein gemustertes Array aufweist.

3. Reflektierende Bildanzeige-Vorrichtung gemäß Anspruch 1 oder 2,
wobei der transparente vordere Flächenkörper (102, 202) ein semiretroreflektierender Flächenkörper ist, der an seiner Innenfläche eine Vielzahl von halbkugelförmigen Vorsprüngen aufweist.

4. Reflektierende Bildanzeige-Vorrichtung gemäß einem der vorhergehenden Ansprüche,
die ferner eine oder mehr Wände oder Teilwände aufweist.

5. Reflektierende Bildanzeige-Vorrichtung gemäß Anspruch 4,
wobei die Wände verwendbar sind, um Kammern zu bilden, um die elektrophoretisch beweglichen Partikel einzuschließen.

6. Reflektierende Bildanzeige-Vorrichtung gemäß einem der vorhergehenden Ansprüche,
die ferner eine Farbfilteranordnung aufweist.

7. Reflektierende Bildanzeige-Vorrichtung gemäß Anspruch 6,
wobei die Farbfilter-Schicht eine Anordnung von Subpixeln von Farben aufweist, die Rot, Grün und Blau aufweisen.

8. Reflektierende Bildanzeige-Vorrichtung gemäß einem der vorhergehenden Ansprüche,
die ferner ein gerichtetes Frontlicht-System aufweist.

9. Reflektierende Bildanzeige-Vorrichtung nach einem der Ansprüche 1 bis 8,
die ferner eine perforierte poröse licht-reflektierende kontinuierliche Membran (220) zwischen der vorderen Elektrode (206) und der hinteren Elektrode (210) aufweist.

## Revendications

1. Dispositif d'affichage d'image réfléchissant, comprenant :
une feuille avant transparente (102, 202) comprenant des protrusions convexes ou des billes sphériques encastrées, à travers lesquelles un spectateur visionne l'affichage ;
une électrode avant (106, 206) ;
un support arrière (108, 208) ;
une électrode arrière (110, 210) ;
un milieu fluide opto-transparent (114, 214) ;
une pluralité de particules mobiles électrophorétiques (116, 216) suspendue dans le milieu fluide opto-transparent (114, 214) ; et
une source de tension électrique (112, 212) destinée à appliquer un biais à travers le milieu fluide opto-transparent (114, 214) afin de faire déplacer au moins une des particules mobiles électrophorétiques (116, 216),
**caractérisé par** une couche diélectrique (118, 218) située à la surface d'au moins une électrode, selon lequel la couche diélectrique comprend du parylène ou du parylène halogéné.

2. Dispositif d'affichage d'image réfléchissant selon la revendication 1, selon lequel l'électrode arrière (110, 210) comprend en outre un transistor à film mince ou un réseau à motif.

3. Dispositif d'affichage d'image réfléchissant selon la revendication 1 ou la revendication 2, selon lequel la feuille avant transparente (102, 202) est une feuille semi-rétroréfléchissante présentant une pluralité de protrusions hémisphériques sur une surface orientée vers l'intérieur de celle-ci.

4. Dispositif d'affichage d'image réfléchissant selon l'une quelconque des revendications précédentes, comprenant en outre une ou plusieurs parois ou parois partielles.

5. Dispositif d'affichage d'image réfléchissant selon la revendication 4, selon lequel les parois peuvent être utilisées pour créer des compartiments afin de confiner les particules mobiles électrophorétiques.

6. Dispositif d'affichage d'image réfléchissant selon l'une quelconque des revendications précédentes, comprenant en outre un réseau à filtre de couleur.

7. Dispositif d'affichage d'image réfléchissant selon la revendication 6, selon lequel le réseau à filtre de couleur comprend un réseau de sous-pixels de couleurs incluant le rouge, le vert et le bleu.

8. Dispositif d'affichage d'image réfléchissant selon l'une quelconque des revendications précédentes, comprenant en outre un système de lumière directionnelle avant.

9. Dispositif d'affichage d'image réfléchissant selon l'une quelconque des revendications 1 à 8 précédentes, comprenant en outre une membrane (220) continue poreuse perforée réfléchissant la lumière entre l'électrode avant (206) et l'électrode arrière (210).
